# EUROPEAN PATENT APPLICATION

(11) **EP 1 881 257 A1**
(43) Date of publication of application: **23.01.2008**
(21) Application number: 06460023.2
(22) Date of filing: 21.07.2006
(51) Int. Cl.: F16M 13/02, B60R 11/02

(54) **Supporting arm with a suction cup and a holder for attaching various equipment within the mechanical vehicles**

(71) Applicant: Bury Sp.z.o.o, 39 300 Mielec (PL)
(72) Inventor: Bury, Henryk, 39 300 Mielec (PL)
(74) Representative: Kaminski, Zbigniew

(57) **Abstract**

The supporting arm fitted with a suction cup (2) and holder for mounting various equipment within the mechanical vehicles composed of one or two parts connected together with joints. The last part is hinged, characterized in that directly below the hinging part (7) in its end opposite to the vacuum suction cup (2), it features an elastic support (8) to rest against the dashboard. There is a ball joint (22) connected with a holder (9) featured with an electrical connection (10) located conveniently above the support (8).

## Description

The subject of this invention is a supporting arm with a suction cup, which fastens the latter to the the windshield of the mechanical vehicle and with a holder for attaching various electronic equipment, e.g. a mobile, navigation equipment screen etc. Within the mechanical vehicles.

Various electronic equipment, e.g. mobiles, TV screens, navigation equipment monitors etc., enjoy more and more extensive application within the mechanical vehicles. These devices are sometimes fastened by suction cups to the windshield of the mechanical vehicle, but more often a reliable fastening to the dashboard of the mechanical vehicle is required. Using only suction cups to this end, used to be usually ineffective, due to minor loads the suction cup would be able to convey.

The European patent description No EP 1 571 045 includes a supporting arm for various electronic equipment, which is composed of a part for mounting arm to the suitable surface, a holder for mounting a device, and an oblong supporting arm for connecting these parts together. The supporting arm is in the form of flexible metal tube with corrugated walls, of the polygonal, preferably hexagonal, cross-section, blinded on both sides with thick-walled bushings which connect it with the arm and the holder. The cross-section of the bushings is made to the shape which reflects the cross-section of the supporting arm. The bushings are fastened to the supporting arm so as these components did not turn against each other.

The European patent description No EP 1 598 487 includes a supporting element for the sanitary ware, fitted with a main member with its component for mounting supporting element to the surface, and a holder for mounting equipment, attached to the main member by connection element, which can be blocked or unblocked in any given position. The connection element is fitted with a joint element which makes it possible to set the support elements in any convenient angular position.

The European patent description No EP 1 666 308 includes a support for various equipment, fitted with a base and a stand with a mounting plate attached to it by a connector, and a mounting plate which includes the equipment holder. The jointed member is connected to the stand by a telescope, blocked once the required height is determined. The mounting plate is connected by two-segment intermediate member to the angular jointed member, blocked in required position.

These known design solution of the support are inconvenient, especially in the field of application in the mechanical vehicles, is insufficient stability of the attachment of the equipment and development of vibrations of the single-side-supported element. It is of great importance, especially in the case of marked weight of the equipment attached in the support holder.

The objective of this invention is to develop such a supporting arm with a suction cup and a holder for mounting various electronic equipment within the mechanical vehicles, which would ensure a stable mounting and supporting of this equipment, especially in the case of marked weight.

Such objective is achieved by a supporting arm with a suction cup and a holder for mounting various electronic equipment within the mechanical vehicles, which is characterized in that, the arm is fitted with an elastic element, found under its hinged member, which supports it on the dashboard on the end opposite to the suction cup. There is preferably a ball joint fastened to the holder, fitted with electrical connection, found over the supporting element.

The supporting element of the arm, according to the invention is composed of the plate, made of an elastic material, preferably of rubber and attached to the bottom area of the hinging part of the supporting arm by the thrust plate.

The joint which connects the rigid portion of the arm, including its hinging part, is fitted with a blocking mechanism composed of a lever, which pivots around the joint axis. There is an array of projections found on the face surfaces surrounding the hole of the lever. The projections operate over the frontal cam located in the internal surface of the side walls of the rigid portion of the arm. The external surfaces of the side wall of the hinged portion of the arm as well as the internal surfaces of the side walls in the rigid portion have an array of projections meshing with each other. Between the side walls of the rigid portion of the supporting lever, there is a cut-out of a size slightly bigger than the size of the lever, where the lever in the "as-blocked" state is hidden.

The arm as to the invention is fitted inside its rigid and hinged portions with a wire system with electric connection which forms an antenna

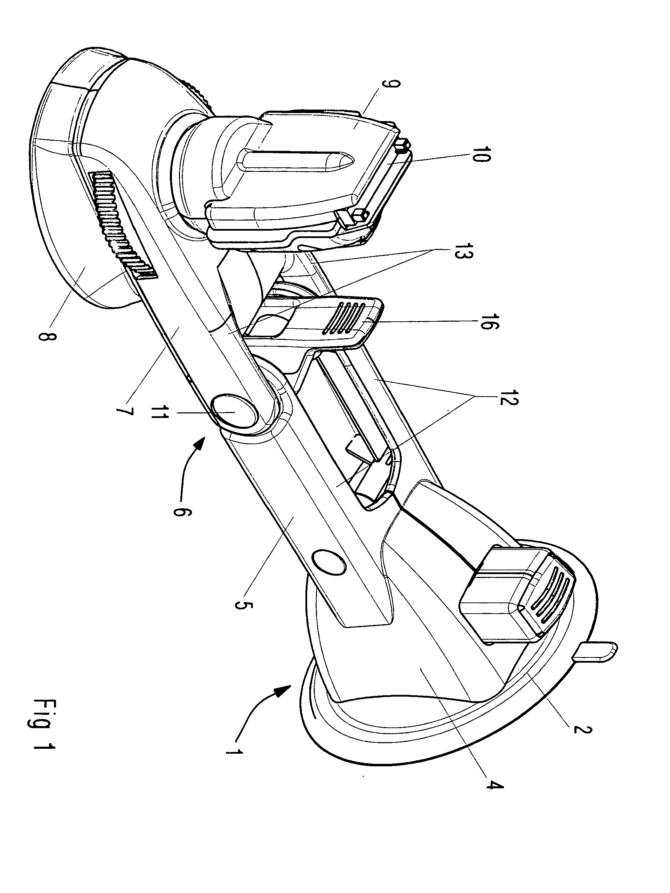

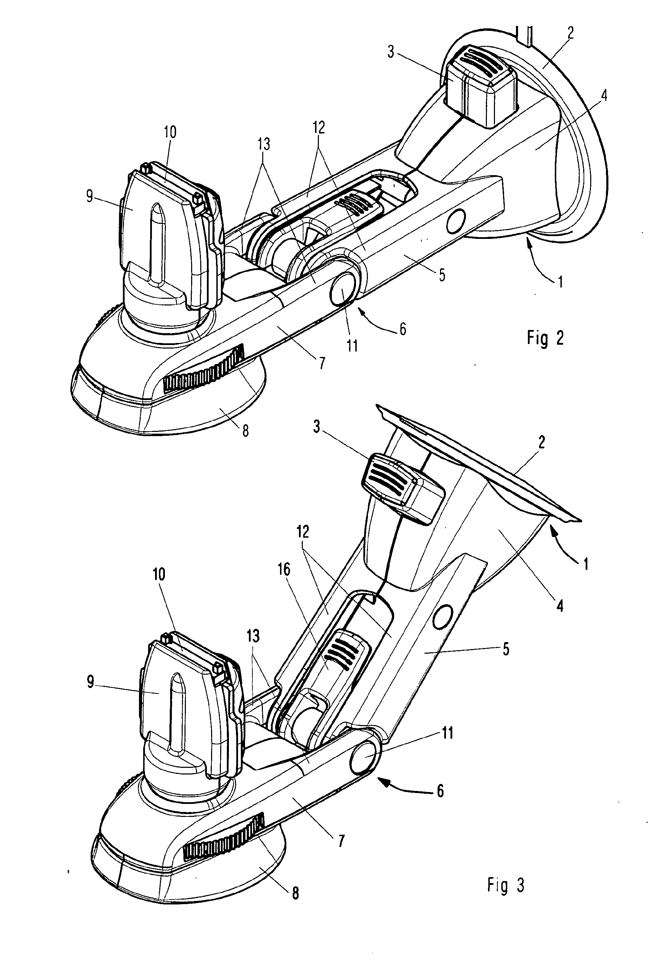

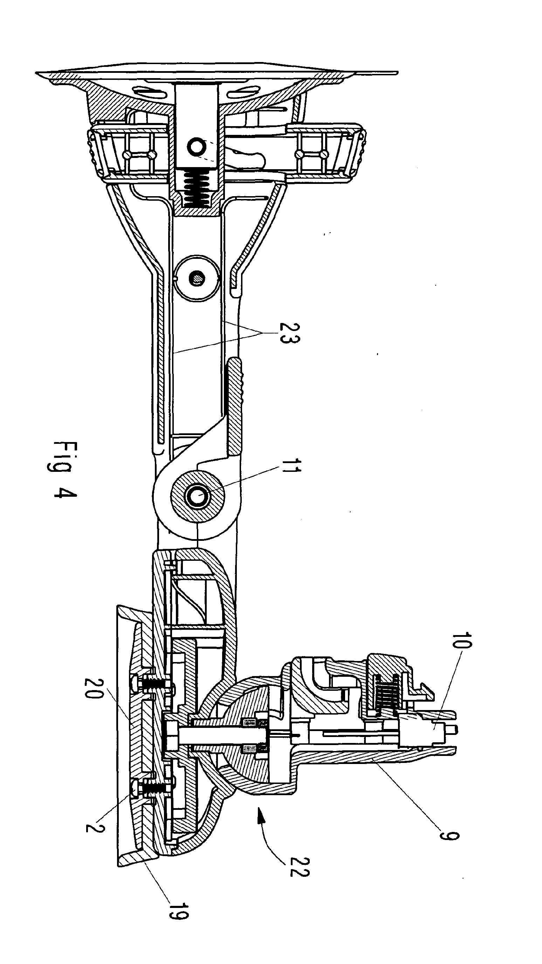

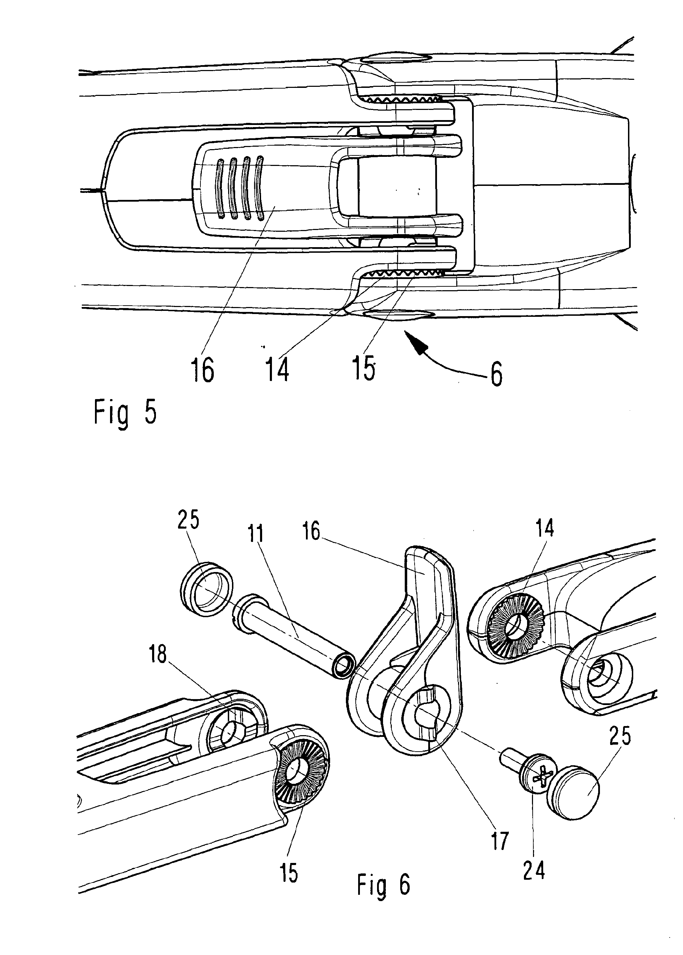

The supporting arm with a suction cup and a holder for mounting various electronic equipment within the mechanical vehicles, according to this invention is shown in the typical design, where, Fig. 1 - shows the perspective view of the supporting arm with a suction cup, a holder and a support when the joint is in the "as-released" position; Fig. 2 - the perspective view of the same arm when the joint is in the "as-blocked" position; Fig. 3 - the perspective view of the arm as referred to in Fig. 1 when the both parts, the rigid and hinged arm are bent off, so as the support precisely adheres to the dashboard of the vehicle, when the joint is in the "as-blocked" position; Fig. 4 - the perspective view of the arm as referred to in Fig. 1 in the longitudinal cross-section; Fig. 5 - the plan view of the joint blocking mechanism, and the Fig. 6 - shows the exploded view of the joint blocking mechanism.

The supporting arm for mounting various electronic equipment within the mechanical vehicles, according to this invention is composed of the following main units, known suction cup 1 with a suction cup 2, a push button 3, which slides within the housing 4 and used for fastening it to the windshield, a hinging element 7 connected by a joint 6 with a housing 4. At the end of the hinging part 7 of the supporting arm, a support 8 found below it, is mounted.

At the end of the hinging part 7 of the supporting arm, a holder 9 is installed. The holder can rotate freely. The holder 9 is fitted with a connection 10 for connecting an electronic device mounted inside the holder 9, (not shown).

The joint 6 of the supporting arm, according to the invention, is composed of a pivot 11, joining the holes in the side walls of 12 of the rigid portion 5 of the supporting arm and striding it, side walls of the hinged part 7 of supporting arm. There are teeth 14 and 15, of joint blocking mechanism, protruding from the side walls 12 of the rigid part 5 and from the side walls 13 of the hinged part 7. Additionally the blocking mechanism is fitted with a lever 16, which external surfaces are made with protrusions 17, which operate over the front cam 18 extending from the internal surfaces of side walls 12 of the rigid portion of the supporting arm 5.

The blocking mechanism of the supporting arm according to this invention, can assume one of two positions: lever 16 upright position, where between the protrusions 17 of the lever 16 the corresponding cutouts of the front cam mesh, which ensure sufficient clearance between side surfaces of the lever 16 and internal surfaces of the side walls 12 of the rigid portion 5 of the arm, as well as sufficient clearance between the face teeth 14 and 15 of the side walls 12 and 13. At such position of the lever 16 it is easy to turn the hinged part 7 of the supporting arm around the pivot 6 or around any angular position of the rigid part 5 and hinging part 7 of the supporting arm.

Figs. 2 and 3 show the lever 16 in the "as-blocked" position, where it is hidden in the cut-out, between the side walls 12 of the rigid portion 5 of supporting arm. At such position the protrusions 17 of the lever push the protrusions of the face cam 18, making the side walls 12 of the rigid portion 5 of the arm to expand. Simultaneously, the face teeth 14 on the side walls 12 of the rigid portion 5 of the arm press against the face teeth 15 in the side walls 13 of the hinging part 7, making it blocked in the established position. Thus at such position of the lever 16 the joint 6 is blocked, preventing rotation of the hinging arm 7 in relation to the rigid arm 5.

The elastic support 8 of supporting arm according to this invention, is composed of a rubber cup 19, compressed by a plate 20 and screws 21 fastened into the hinging part 7 of the arm.

In the end of the hinging part 7 of the supporting arm to the invention there is known ball joint 22, attached to the holder 9 and fitted with electric connection 10. The electric connection 10 is connected to the wire system 23, which goes along the rigid part 5 as well as hinging part 7 of the supporting arm, and plays the role of an antenna.

The antenna composed of the wires 23 is used for receiving radio waves, as well as the digital communication and other radio/TV signal broadcasting stations etc.

Fastening of the supporting arm within the mechanical vehicle is performed in the following manner.

Prior to fastening of the arm, one has to rise the lever 16 into the up position, releasing at the same time the joint 6. Then it is necessary do push the suction cup 1 against the windshield of the mechanical vehicle in the place selected in such way, as the elastic support 8 would rest freely on the dashboard of the mechanical vehicle. The angle between the rigid portion 5 and a hinging one 7 can be selected freely, depending on the dashboard geometry in relation to the windshield, i.e. the position of both the suction cup 1 and a support 8.

Once the suction cup 1 is fastened, it is necessary to block the joint 6 by turning the lever 16 into the horizontal position, when it is completely hidden in the the cut-out made between the side walls 12 of the rigid portion 5 of the supporting arm.

As the arm is supported by elastic support, which rests over the external surface of the dashboard, user gets sufficiently durable and rigid mounting of the electronic device placed on the holder 9. Due to the antenna made of the wires 23, it is possible to receive any radio frequencies, trough the supporting arm. The radio signal is conveyed by electric connection 10 to the electronic device place in the holder 9 of the suction cup.

### Key

- 1: suction cup
- 2: suction cup
- 3: push button
- 4: housing
- 5: rigid part of the supporting arm
- 6: joint
- 7: hinging part of the supporting arm
- 8: elastic support
- 9: handle
- 10: connection
- 11: joint axis
- 12, 13: side walls
- 14, 15: teeth
- 16: lever
- 17: projections
- 18: front cover
- 19: rubber plate
- 20: plate
- 21: screws
- 22: ball joint
- 23: leads

## Claims

1. The supporting arm with a suction cup and a handle for attaching various equipment within the mechanical vehicles composed of one flexible, two or several connected parts, of which the last is hinged, **characterized by** that, the opposite to mounting joint of the vacuum suction cup under its hinged part (7) is fitted an elastic support (8) for resting upon the dashboard. There is a ball joint (22) connected to the handle (9) fitted with electric connection (10), located conveniently above the support (8).

2. The arm as referred to in claim 1, **characterized in that**, the support (8) is composed of the plate (19), made from an elastic material, conveniently from rubber, attached to the lower surface of the hinged part (7) of the supporting arm by the thrust plate (20).

3. The arm as referred to in claim 1, **characterized in that**, the joint (6), connecting the rigid part (5) of the arm with its hinged part (7), is fitted with a blocking mechanism. The mechanism is composed of the lever (16), installed rotationally on the pivot (11) of the joint (6) and with front surfaces surrounding the hole of the lever with an array of front facing projections (17). These projections operate over the front cam (18) found in the internal surface of the side walls (12) of the rigid portion (5). The external surfaces of the side walls (13) of the hinged part (7) as well as internal surfaces of the side walls (12) of the rigid part (5) of the supporting arm are fitted with an array of teeth which mesh with each other (14, 15).

4. The arm as referred to claim 3, **characterized by** that between the side walls (12) of the rigid part (5) of the supporting arm, a cut-out is found. The size of the cut-out is slightly greater than the size of the lever (18), as this lever is installed there in the "as-blocked" position of the joint (6).

5. The arm as referred to claim 1, **characterized in that** it features a cable system (23) inside the rigid part (5) as well as in the hinged part (7), which makes an aerial and is connected electrically (10).

## Amended claims

### Amended claims in accordance with Rule 137(2) EPC.

**1.** A supporting arm with a suction cup and a handle for attaching various equipment within a mechanical vehicle, composed of one flexible and two or more connected parts, of which the last one is hinged, the said arm provided with an elastic support **(8)** for resting on a dashboard, and that there is a ball joint favourably located above the said support and connected to a handle with an electrical connection, **characterized in that** the said joint **(6)**, connecting the rigid part **(5)** of the arm with its hinged part **(7),** is provided with a blocking mechanism, which comprises a lever **(16)** installed rotationally on a pivot **(11)** of said joint **(6)** and having, on its front surfaces surrounding a hole of said lever, an array of projections **(17)** cooperating with a front cam **(18)** on an internal surface of side walls **(12)** of said rigid part **(5),** wherein external surfaces of side walls **(13)** of said hinged part **(7)** and internal surfaces of side walls **(12)** of said rigid part **(5)** of said supporting arm are provided with an array of teeth **(14, 15)** cooperating with each other.

**2.** A supporting arm according to claim 1, **characterized in that** a cut-out is formed between said side walls **(12)** of said rigid part **(5)**, wherein the size of said cut-out is slightly greater than the size of said lever **(16)** being situated in said cut-out in the as-blocked position of said joint **(6)**.

**3.** A supporting arm according to claim 1, **characterized in that** the wiring system **(23),** connected to the electrical connection **(10)** and located inside said rigid part **(5)** and said hinged part **(7),** forms an antenna.
